# EUROPEAN PATENT SPECIFICATION

(11) **EP 4 500 680 B1**
(45) Date of publication and mention of the grant of the patent: **18.02.2026**
(21) Application number: 23714509.9
(22) Date of filing: 23.03.2023
(51) Int. Cl.: H02K 49/10, H02K 51/00, H02K 16/00

(54) **DOUBLE ROTOR MACHINE**
DOPPELROTORMASCHINE
MACHINE À DOUBLE ROTOR

(30) Priority: 25.03.2022 CH 3292022
(43) Date of publication of application: 05.02.2025
(73) Proprietor: 4QT GmbH, 8004 Zürich (CH)
(72) Inventor: VETTER, Marc, 8057 Zürich (CH); PALA, Uygar, 8046 Zürich (CH); JECMENICA, Milos, 11221 Belgrade (RS); TERZIC, Mladen, 11050 Belgrade (RS)
(74) Representative: Rentsch Partner AG
(86) International application number: PCT/EP2023/057434
(87) International publication number: WO 2023/180432

(56) References cited:
- EP-B1- 1 313 627
- CN-C- 100 544 170
- BACKSTROM T ET AL: "Integrated energy transducer for hybrid electric vehicles", ELECTRICAL MACHINES AND DRIVES, 1997 EIGHTH INTERNATIONAL CONFERENCE O N (CONF. PUBL. NO. 444) CAMBRIDGE, UK 1-3 SEPT. 1997, LONDON, UK,IEE, UK, 1 September 1997 (1997-09-01), pages 239 - 243, XP006503611, ISBN: 978-0-85296-696-9, DOI: 10.1049/CP:19971075
- KUTT FILIP ET AL: "Axial-Flux Permanent-Magnet Dual-Rotor Generator for a Counter-Rotating Wind Turbine", ENERGIES, vol. 13, no. 11, 2 June 2020 (2020-06-02), CH, pages 2833, XP093055873, ISSN: 1996-1073, DOI: 10.3390/en13112833

## Description

### FIELD OF THE DISCLOSURE

The present disclosure relates to a double rotor machine for selective transmission of mechanical power and/or generation of electrical power and a drive train for a vehicle comprising such a double rotor machine.

### BACKGROUND OF THE DISCLOSURE

Conventional vehicles being driven by an Internal combustion engine (ICE) rarely operate at an optimal efficiency of the ICE. Depending on the drivers input and the driveway demands, the ICE's engine speed and torque are determined and transmitted via a mechanical gearbox to the wheels. However, ICEs operate only at a high efficiency in a limited engine speed and torque region. In order to operate an ICE constantly at a high efficiency, the generated engine speed and torque should be controlled to minimize co2 emissions by staying in said high efficiency region. A Four-Quadrant Transducer (4QT) system achieving this, typically comprises an ICE, a battery and the four-quadrant transducer arranged between the ICE and the wheels. Compared to a conventional vehicle, the four-quadrant transducer serves as the gearbox, however additionally working as an electric motor and generator to compensate over/undersupply of engine speed and torque by the ICE constantly operating at high efficiency.

Several four-quadrant transducers known from the prior art are described hereinafter.

FR2630868A1 published in 1989 in the name of Jean Paul Sibeud relates to a device designed to be interposed between a rotating motor shaft and a rotating drive shaft, namely on the transmission drive train of a motor vehicle. It comprises an electric machine having in combination - on the one hand two concentric rotors, coaxial with a stator inside which they are arranged, one of these rotors being integral with the motor shaft while the other is integral with the receiver shaft - on the other hand.

US2014292131A1 published in 2014 in the name of Caterpillar Inc. relates to a dual rotor switched reluctance machine with a fixed stator and separate input and output rotors on either side of the fixed stator is used to transmit power between a power source such as a gas engine and a mechanical drive unit such as wheels or tracks.

EP3075587A1 published 2016 in the name of Marc Vetter relates to a drive arrangement for a motor vehicle comprising an internal combustion engine with at least one output shaft providing a rotary motion, at least one wheel, in particular at least two wheels, which is/are driven by said internal combustion engine, wherein said wheel or each of said wheels comprises a drive shaft to which said rotary motion is provided in order to drive the respective wheel. The drive arrangement comprises further at least one electromechanical machine which is arranged between said output shaft and at least one of said drive shafts, such that with the electromechanical machine the respective drive shaft is engageable and disengageable to said output shaft, wherein the rotary motion provided by the output shaft is directly or indirectly inputted in said electromechanical machine and is directly or indirectly outputted by said electromechanical machine to said drive shaft when the electromechanical machine engages the output shaft and the drive shaft.

Document Backstrom T et al: "Integrated energy transducer for hybrid electric vehicles", ELECTRICAL MACHINES AND DRIVES, 1997 EIGHTH INTERNATIONAL CONFERENCE 0 N (CONF. PUBL. NO. 444) CAMBRIDGE, UK 1-3 SEPT. 1997, LONDON, UK,IEE, UK, 1 September 1997 (1997-09-01), pages 239-243, XP006503611, D01: 10.1049/CP:19971075 ISBN: 978-0-85296-696-9 relates to a driveline for a hybrid electric vehicle, which utilizes both an Internal Combustion Engine (ICE) and a battery to power the vehicle. The engine output torque can be used directly to drive the vehicle or to drive the generator to produce electrical energy.

### SUMMARY OF THE DISCLOSURE

The motor-generator solutions in typical and known Four-Quadrant Transducer (4QT) drivetrains are a combination of a double rotor machine, usually a radial flux permanent magnet synchronous machine (RFPMSM) and a stator. The mechanical power from the ICE is transmitted to an outer rotor of the RFPMSM coupled to a drive shaft or the mechanical power is converted to electric power by the windings of an inner rotor and stator of the RFPMSM. The engine speed and torque transmitted to the outer rotor is controlled, resulting in the drive shaft speed being independent of the ICE.

A solution to implement such a 4QT this is a switched reluctance motor (SRM) in radial flux (RF) configuration with its simple manufacturing, robustness, easy maintenance, high efficiency, operateability in extreme conditions, low cost and fast acceleration. However, the SRMs known from the prior art have several drawbacks including high noise due to magnetic force related vibrations of stator and high torque ripple, and the drive performance depends strongly on the control strategy. It is one object of the disclosure to address at least one problem of the prior art.

A double rotor machine (DRM) according to the disclosure for selective transmission of mechanical power and/or generation of electrical power in a drive train of a vehicle is mechanically interconnectable to an electrical machine of a drive train to form an advanced four-quadrant transducer. Omitting the stator of known approaches may allow to construct a system providing both high torque density and high power density. Typically, the double rotor machine comprises an input drive shaft, an input rotor and an output rotor coupled to an output drive shaft. The double rotor machine of the invention has the combination of features defined in claim 1.

According to the invention, the double rotor machine comprises the input drive shaft for mechanically coupling the double rotor machine to an engine, in particular an internal combustion engine, an electric engine, a turbine or any other kind of engine, said input drive shaft extending in an axial direction into a housing of the double rotor machine. The

input rotor is mechanically interconnected to the input drive shaft and is arranged inside the housing rotatable about a common axis of rotation. The output rotor is arranged rotatable about the common axis of rotation and is mechanically interconnected to the output drive shaft passing through the housing for mechanically coupling the double rotor machine to a consumer of mechanical power. Consumers of mechanical power may comprise at least one out of the following: the driveshaft for driving the wheels, a hydraulic or pneumatic system or the like.

According to two alternative designs of the invention, the input rotor or the output rotor comprises a disc-shaped first array comprising ferromagnets and / or ferromagnetic material elements and a disc-shaped second array of ferromagnets and / or ferromagnetic material elements arranged next, preferably axially next or concentric, with the first array and being spaced apart therefrom a certain distance in the axial direction, wherein at least one spacer extends in the axial direction fixedly interconnecting the first and the second array of ferromagnets and / or ferromagnetic material elements. The output rotor or the input rotor respectively is arranged rotatable about the common axis of rotation between the first and the second disc-shaped array of ferromagnets. The ferromagnets and / or the ferromagnetic material elements are for example at least partially made of iron or an iron alloy (steel), in particular of iron or steel laminations. The ferromagnets and / or the ferromagnetic material elements provide for example a permanent magnetic field. In other words, the ferromagnets and / or the ferromagnetic material elements are for example permanent magnets.

In order to transmit mechanical power and/or generate electrical power, the input rotor or the output rotor respectively comprises a disc-shaped array of electromagnets arranged next, preferably axially next or concentric, with the first and the second array of ferromagnets and / or ferromagnetic material elements for generating electrical power when rotating at a lower angular velocity than the input rotor.

Either the input rotor comprises the disc-shaped first and second array and the output rotor comprises the disc-shaped array comprising the electromagnets or the output rotor comprises the disc-shaped first and second array and the input rotor comprises the disc-shaped array comprising the electromagnets.

The double rotor machine has an axial flux (AF) configuration. In other words, the magnetic flux between the electromagnets of the output rotor and the ferromagnets of the input rotor is generally orientated parallel to the common axis of rotation. This allows a compact construction of the double rotor machine and improves the system's flexibility. Further, an AF topology allows an increase in the number of poles compared to the prior art and hence the power density, resulting in a DRM with higher performance. However, a radial flux configuration is possible as well. An additional benefit of the DRM according to the disclosure is that no permanent magnets are required.

During operation the output rotor is preferably drivable at a higher angular velocity than the input rotor when electrical power is supplied to the output rotor. Alternatively, or in addition, output rotor can be driven at a lower angular velocity than the input rotor to generate electrical power. This allows the ICE being operated always in the high efficiency region resulting in a 15% to 40% reduction in fuel consumption compared to a conventional vehicle. A reduced fuel consumption at a similar performance results in a reduction of CO2 emissions.

Good results can be achieved when at least one ferromagnet of the first array and/ or the second array has an essentially U- or V-shaped cross-section. Preferably all ferromagnets of the first array and/or the second array have an essentially U- or V-shaped cross-section.

In a preferred variation the input rotor is of a multipart design. Depending on the design, the input rotor comprises a first disc-shaped base having detachably arranged thereon in the assembled state the ferromagnets of the first array and a second disc-shaped base having detachably arranged thereon in the assembled state the ferromagnets of the second array. This allows to reduce the complexity when manufacturing the input rotor, as its parts can be produced separately and in an efficient manner. Preferably the first and/or the second base are at least partially made from a lightweight material, in particular a non-magnetic material, such as metal or metal compounds like aluminium. However other materials are possible as well such as composite materials like fiber reinforced plastics.

If appropriate the ferromagnets of the first and/or the second array are position fixed by support elements at the first and/or second disc-shaped base respectively, in particular the support elements are in a cross-sectional view at least partially arranged inside the U- or V-shape of the respective ferromagnet. Preferably the first and second disc-shaped arrays have essentially the same diameter, in particular the disc-shaped first array comprises the same number of ferromagnets as the disc-shaped second array.

For a high magnetic flux density, the output rotor comprises several ferromagnetic cores each having in the axial direction a first end section facing the first array of ferromagnets and a second end section facing the second array of ferromagnets. Preferably the first and/or the second end section of each ferromagnetic core is at least partially encompassed by windings of a set of windings respectively. For stabilizing the array of electromagnet, preferably a spacer is arranged between two neighboring cores respectively. This allows similar to the first and second array of ferromagnets a segmented structure / multipart design of the output rotor. If appropriate, the spacers may have an essentially rectangular cross-section perpendicular to the axial direction and the cores may have a corresponding essentially isosceles trapezoid-shaped cross-section. The ferromagnetic cores are for example made of the same material as the ferromagnets or the ferromagnetic material elements.

Typically, the number of ferromagnets or ferromagnetic material elements and the number of electromagnets have a ratio of 1.1 to 1.5, in particular 1.2. Preferred number parings of electromagnets and ferromagnets are 12/18 or 10/12 or 20/24, most preferred being 15 / 18 (electromagnets at the output rotor) / (ferromagnets at the input rotor, each array having 18 ferromagnets). However, depending on field of application, the numbers may vary to account for the spatial dimensions of the input and output rotors.

If present, the disc-shaped array of electromagnets usually comprises at least one set of windings electrically interconnectable to a battery for receiving and/or providing electrical energy to the battery. In a preferred variation the array of electromagnet comprises three or more sets of windings. A good routing of the electrical interconnections is possible when the output shaft comprises a central opening extending in the axial direction concentrically with the common axis of rotation for running electrical interconnections of the at least one set of windings.

The input drive shaft and / or the output shaft are for example made of steel, in particular high strength steel. Further, at least some of the parts of the input rotor and or of the output rotor may be made of aluminum, in particular aerospace grade aluminum.

The ferromagnets or the ferromagnetic material elements of the first array are preferably arranged essentially mirror-symmetric relative to the ferromagnets or the ferromagnetic material elements of the second array. This results in a higher efficiency compared to configurations, wherein the first array is arranged circumferentially offset relative to the ferromagnets or the ferromagnetic material elements of the second array.

For a good performance, a distance in axial direction (parallel to the common axis of rotation) between the output rotor and the input rotor is between 0.1 mm and 2 mm, preferably between 0.5 mm and 1.5 mm, in particular about 1 mm.

Due to the high power density of the DRM according to the disclosure a cooling means can be arranged at an outside of the housing. Said cooling means being fluidly interconnected to an inside of the housing, to provide good thermal control of the components arranged therein. Preferably the cooling means is formed as an oil spray cooling comprising at least one nozzle interconnected to an oil sink, in particular one or two units of two or three nozzles each.

Another aspect of the disclosure is directed to a drive train for a vehicle, in particular of a motor vehicle, the drive train comprising a double rotor machine as described above, wherein an electrical machine is mechanically coupled to the output shaft of the double rotor machine for example for transmission of torque therebetween. The electrical machine is typically implemented as an electric motor/ generator. In said drive train, the four-quadrant transducer is formed by the double rotor machine and the thereto mechanically coupled electrical machine, wherein the double rotor machine can be used to control engine speed provided to the wheels and the electrical machine to control the torque. The electric machine may be the stator of the double rotor machine, which is for example a part of the double rotor machine.

The vehicle of the present disclosure may include motor vehicles, heavy duty equipment, mobile and / or stationary, for example configured for high way or off high way applications. Other vehicles are also conceivable

If present, the electrical machine is usually electrically interconnected to a battery, in particular to the same battery as the double rotor machine. In some variations electrical interconnections between the battery and the double rotor machine and/or the electrical machine comprise a slip ring and / or power electronics between the double rotor machine and the battery. Preferably, the slip ring for each electrical interconnection of the double rotor machine and/or electrical machine are arranged in a common slip ring housing. For a compact construction, the output drive shaft extends in the axial direction into the slip ring housing, allowing a short wiring distance from the electromagnets to the slip rings.

In a preferred variation a control unit is interconnected to the at least one set of windings of the output rotor of the double rotor machine and being configured to receive an operator input and to control the transmission of rotational speed from the input rotor to the output rotor based on the operator input. If appropriate the control unit can be interconnected to the electrical machine and being configured to determine the torque transmitted between the output drive shaft and the electrical machine by controlling the electrical machine. This allows to control both, the torque and the engine speed provided to the consumer of mechanical power, e.g. the wheels of the motor vehicle.

In a variation, the double rotor machine further comprising at least one inverter, which is electronically connected to the disc-shaped array of electromagnets and preferably to the battery, wherein the inverter is configured to convert received electrical current. The power supply of the double rotor machine is for example the battery producing De, and the double rotor machine itself is for example a three-phase AC electric machine. The inverter of the double rotor machine connects both components by converting the DC side of the battery to a three-phase AC voltage, which the double rotor machine uses. In AC, electricity flows in both directions in the circuit as the voltage changes from positive to negative. The inverter regulates the flow of electrical power, enabling the double rotor machine to work in motor mode and in generator mode. The inverter of the double rotor machine is a three-phase inverter where 1 winding/coil is connected to 2 legs forming the half-bridge. An additional 7th leg exists in the inverter for braking.

The double rotor machine structure is preferably based on a switch reluctance machine, as when power is applied to the windings of the outer rotor connected to the traction side, the outer rotor's magnetic reluctance creates a force that aligns the inner rotor poles connected to the internal combustion engine with the nearest outer rotor pole. In order to maintain rotation, an electronic control system switches on the windings of successive stator poles in sequence so that the magnetic field of the stator "leads" the rotor pole, pulling it forward. The inverter enables this switching sequence by appropriately turning the transistors on and off in its phase legs. As a result, the desired output waveforms are delivered to the double rotor machine.

An advantageous assembly is realizable when at least one of the input rotor or the output rotor comprises a segmented rotor structure, thereby being formed out of a plurality of rotor segments.

An advantageous control of the enhancement of rotation speed is for example achievable, when the double rotor machine comprises a plurality of the disc-shaped first arrays and a plurality of the disc-shaped second arrays and a plurality of the disc-shaped arrays of electromagnets arranged next to each other, preferably axially next or concentric, and rotatable about the common axis of rotation.

A preferred mechanical connection of rotating parts is achievable when at least some of the rotating parts are connected with each other via at least one pre-stressed conical element, which is/are configured to release stress during operation. The pre-stressed conical element is for example arranged between the ferromagnets / ferromagnetic material elements and the support elements of the rotors.

Improved mechanical coupling is possible when at least one bearing, preferably all bearings, of the input drive shaft is / are shrink fitted onto the input drive shaft, and / or wherein at least one bearing, preferably all bearings, of the output drive shaft is shrink fitted onto the output drive shaft. The bearings are configured to bear the respective shafts within the housing of the double rotor machine.

The disc-shaped first array in combination with the disc-shaped second array may has a number of magnetic poles is in the range from 15 to 20, preferably 18, and / or wherein the disc-shaped array comprising the electromagnets may has a number of magnetic poles in the range from 10 to 20, preferably 15.

Advantageous stability is possible with the input drive shaft and / or the output shaft being made of iron alloy, preferably steel, in particular high strength steel.

Further, an advantageous reduction of rotating mass is possible when the input rotor and / or of the output rotor is/are made at least partially of aluminum, in particular aerospace grade aluminum. The support elements, the first base and / or the second base are for example made of aluminum.

The nominal DC link voltage of the double rotor machine is in the range from 250V to 400V, preferably at 375V.

It is preferred that a nominal speed of the input rotor is in the range from 2400 rpm to 3200 rpm, preferably at 2700 rpm, and / or wherein the nominal speed of the output rotor is in the range from 3600 rpm to 4500 rpm, preferably at 4200 rpm.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: an exploded view of a first variation of a double rotor machine according to the disclosure;
- Fig. 2: a partially sectioned view of the first variation of the double rotor machine;
- Fig. 3: a detailed view of the double rotor machine of Fig. 2, indicated by circle O;
- Fig. 4: a sectioned view of the first variation of the double rotor machine of Fig. 2 indicated by section line MM; and
- Fig. 5: a schematic diagram of a first variation of a drive train according to the disclosure;
- Fig. 6: a schematic diagram of a second variation of a drive train according to the disclosure;
- Fig. 7: a section view of a second variation of the double rotor machine.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

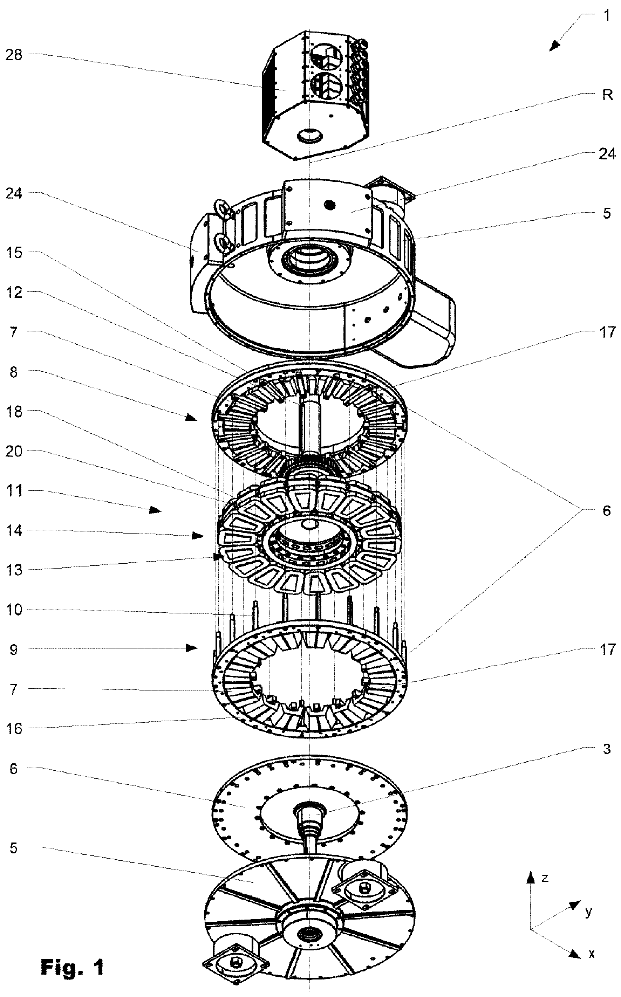

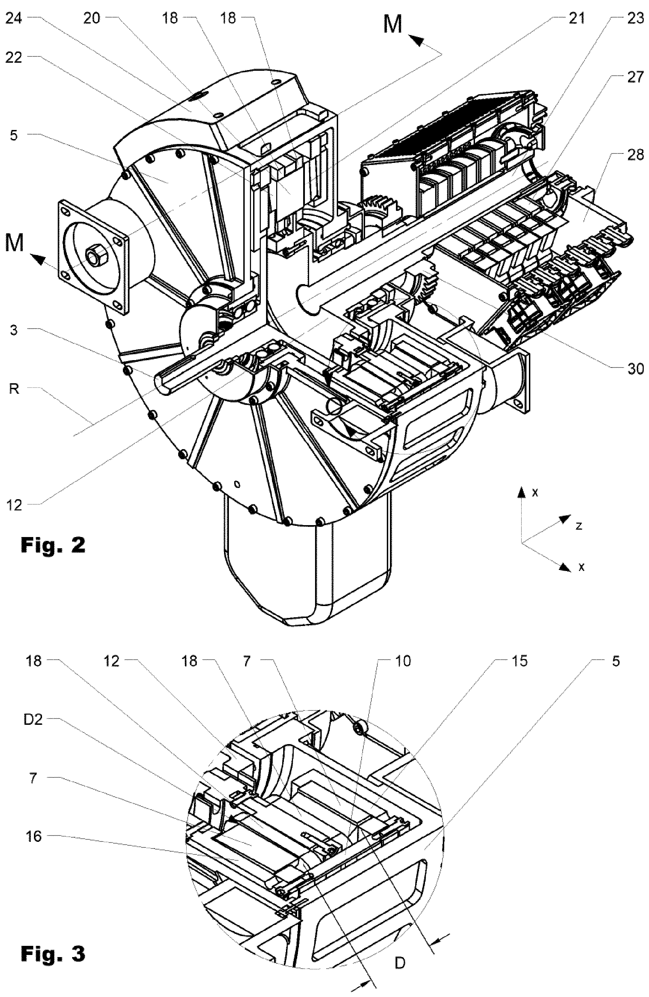

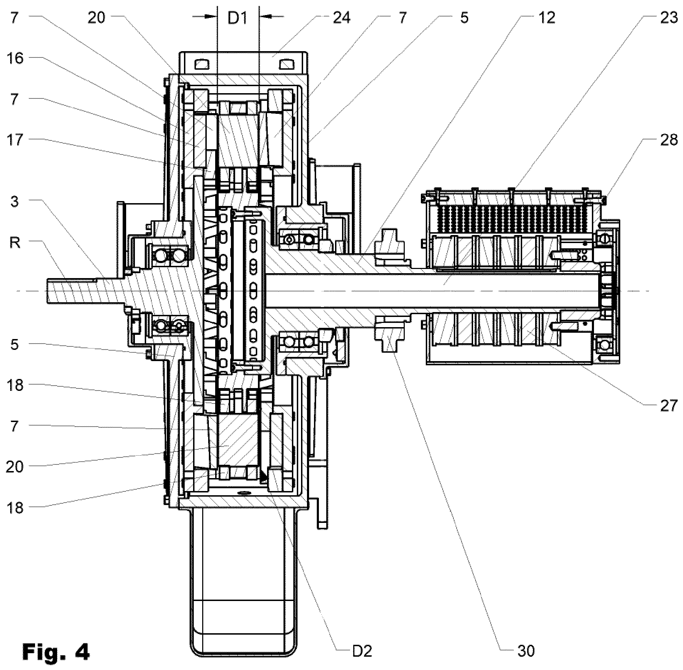

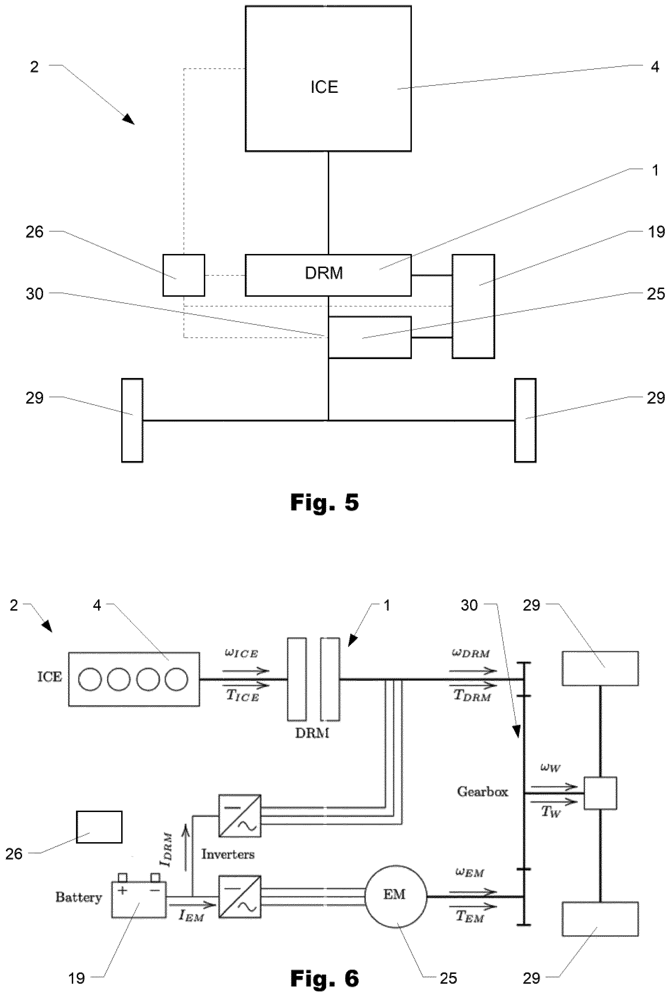

**Figure 1** shows an exploded view of a first variation of a double rotor machine 1 according to the disclosure. **Figure 2** shows a partially sectioned view of the first variation of the double rotor machine 1, wherein **Figure 3** displays a detailed view of the double rotor machine 1 of **Figure 2****,** indicated by circle O. In **Figure 4** a sectioned view of the first variation of the double rotor machine 1 of **Figure 2** indicated by section line MM is shown and in **Figure 5** of a first variation of a drive train 2 according to the disclosure is shown in a schematic diagram. **Figure 6** shows a section view of a second variation of the double rotor machine 1.

The first variation of the double rotor machine 1, as shown in **Figures 1** to **4****,** typically comprises an input drive shaft 3, an input rotor 6 and an output rotor 11 coupled to an output drive shaft 12 for selective transmission of mechanical power and/or generation of electrical power in a drive train 2 of a motor vehicle (not shown). The input drive shaft 3 is mechanically interconnectable to an ICE 4, whereas the output drive shaft 12 is mechanically interconnectable to the wheels 29 of a respective motor vehicle. As best visible in **Figure 2****,** the input drive shaft 3 extends in an axial direction z into a housing 5 of the double rotor machine 1. Attached to the input drive shaft 3 the input rotor 6 is arranged rotatable about a common axis of rotation R inside the housing 5. The output rotor 11 is arranged rotatable about the same common axis of rotation R and is mechanically interconnected to the output drive shaft 12 passing through the housing 5 opposite to the input drive shaft 3.

As visible in **Figure 1****,** the input rotor 3 comprises a disc-shaped first array 8 of ferromagnets 7 and a disc-shaped second array 9 of ferromagnets 7 arranged concentric with the disc-shaped first array 8 (they rotate both about the same common axis of rotation R during operation) and spaced apart therefrom at a distance D1 in the axial direction z. Several spacers 10 extend in the axial direction z fixedly interconnecting the first and the second array 8, 9 of ferromagnets 7. The first and the second array 8, 9 of ferromagnets 7 form a cage-like structure for accommodating the output rotor 11 therein. Said output rotor 11 being arranged rotatable about the common axis of rotation R between the first and the second array 8, 9 of ferromagnets 7. The output rotor 11 typically comprises a disc-shaped array 14 of electromagnets 13 arranged concentric with the first and the second array 8, 9 of ferromagnets 7 for generating electrical power when rotating at a lower angular velocity than the input rotor 3.

Regarding the design of the input rotor 3 and the output rotor 11, as shown in **Figure 1****,** both comprises a segmented / multipart structure compared know rotors. The ferromagnets 7 of the first array 8 and the second array 9 have an essentially U- or V-shaped cross-section in a plane parallel to the axil direction z. These ferromagnets 7 are detachably arranged on a first base 15 or a second base 16 respectively and fixed thereon by support elements 17. The support elements 17 extend along an indentation of the ferromagnets 7 formed by their U- or V-shaped cross-section. By means of screws the support elements 17 are attached to the respective base 15, 16. Both arrays of ferromagnets 8, 9 of the first variation each have eighteen (18) ferromagnets.

The output rotor 11 comprises fifteen (15) electromagnets 13. Each electromagnet comprises a first end section 21 facing the first array 8 of ferromagnets 7 and a second end section 22 facing the second array 9 of ferromagnets 7. The distance D1 between the first end section 21 and the first array 8 of ferromagnets 7 is in the shown variation around 1mm. Similarly, the distance D1 between the second end section 22 and the second array 9 of ferromagnets 7 is in the shown variation around 1mm.

As can be seen in **Figure 1****,** the end sections 21, 22 of each core 20 is coiled with windings 18. The windings 18 around end sections 21, 22 of each core 20 do respectively belong to a common winding 18. The shown variation comprises three individual sets of windings 18 allowing to operate the output rotor 11 with three phases. For electrically interconnecting the windings 18 to a battery 19 for receiving and/or providing electrical energy to the battery 19, the output drive shaft 12 comprises a central opening 23 extending in the axial direction z concentrically with the common axis of rotation R for running electrical interconnections of the windings 18. Alternatively or additionally, the input drive shaft 3 may comprise a respective central opening for running electrical interconnections of the windings 18.

To provide cooling, in particular to the electromagnets 13 of the output rotor 11, a cooling means 24 is arranged at an outside of the housing 5. The cooling means 24 is in the shown variation formed as an oil spray cooling 24 being fluidly interconnected to an inside of the housing 5. The oils spray cooling 24 comprises several nozzles being supplied by an oil sink to spray oil onto the rotors 3, 11.

In **Figure 5** the first variation of the drive train 2 is shown, said drive train 2 typically comprises an ICE 4, or any other engine, mechanically interconnected to the DRM 1 via input drive shaft 3. The DRM 1 is on the other side mechanically interconnected to an electrical machine 25 via a gearing 30 mechanically coupled to the output drive shaft 12. The electrical machine 25 is usually electrically interconnected to a battery 19, in particular to the same battery 19 as the double rotor machine 1.

The solid lines in **Figure 5** indicate an interconnection for transmission of energy, either mechanical or electrical energy. The dashed lines indicate signal paths. In the shown variation, a control unit 26 is interconnected to the at least one set of windings 18 of the output rotor 11 of the double rotor machine 1. The control unit 26 being configured to receive an operator input and to control the transmission of rotational speed from the input rotor 3 to the output rotor 11 based on the operator input. In addition, the control unit 26 is typically interconnected to the electrical machine 25 and being configured to determine the torque transmitted between the output drive shaft 12 and the electrical machine 25 by controlling the electrical machine 25. The output drive shaft 12 is further directly or indirectly mechanically interconnectable to the wheels 29 of the respective motor vehicle by known means.

In the shown variations, the electrical interconnections between the battery 19 and the double rotor machine 1 and/or the electrical machine 25 each comprise a slip ring 27. As best visible in **Figures 2** and **4****,** the slip ring 27 for each electrical interconnection of the double rotor machine 1 and/or electrical machine 25 are arranged in a common slip ring housing 28. Preferably, the output drive shaft 12 extends in the axial direction z into the slip ring housing 28, allowing a short wiring distance from the electromagnets 13 to the slip rings 27. The double rotor machine 1 may further comprise at least one inverter configured to convert received electrical current, either from the electrical windings 18 or from the battery 19 depending on the use case.

In **Figure 6** a second variation of the drive train 2 is shown, said drive train 2 typically comprises an ICE 4, or any other engine, mechanically interconnected to the DRM 1 via input drive shaft 3. The DRM 1 is on the other side mechanically interconnected to an electrical machine 25 via a gearing 30 mechanically coupled to the output drive shaft 12. The electrical machine 25 is usually electrically interconnected to a battery 19, in particular to the same battery 19 as the double rotor machine 1. **Figure 6** further shows schematically the control unit 26, which is configured to control the different parts of the drive train 2. Figure 6 further shows two inverters, wherein the first is arranged between the battery 19 and the electrical machine 25 and the second is arranged between the battery 19 and the double rotor machine 1. The inverters are configured to convert received direct current from the battery 19 into alternating current for the double rotor machine 1 or the electrical machine 25 or vice versa. Figure 6 further shows that the electrical machine 25 is mechanically coupled via the gearing 30 with the double rotor machine 1 (thereby forming for example part of the double rotor machine 1). Further, the double rotor machine 1 and the electrical machine 25 are coupled via the gearing 30 with the wheels 29.

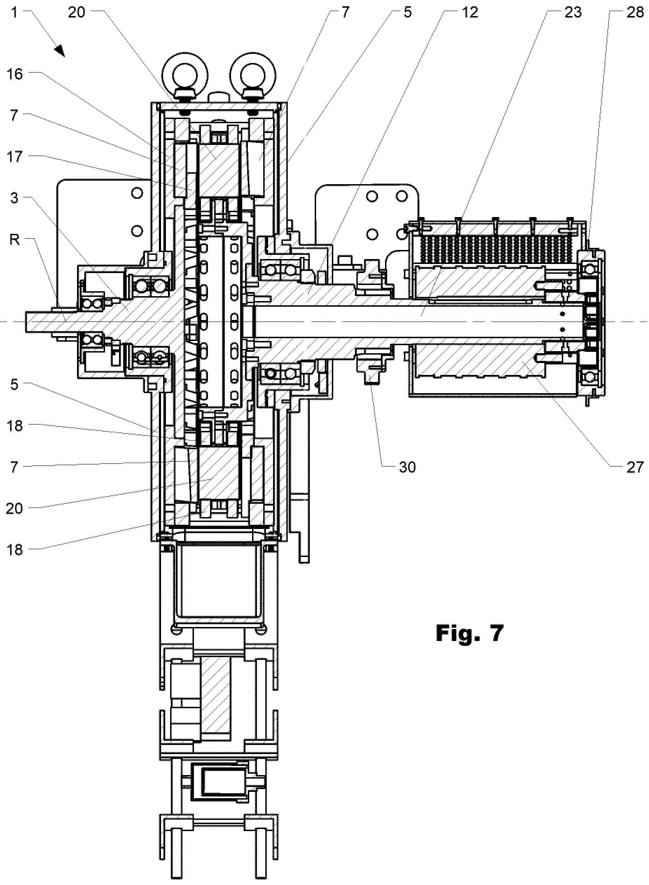

**Figure 7** shows a second variation of the double rotor machine 1 in a longitudinal section view. This variation differs mainly from the variation shown in Figure 4 in the bearing concept. The input drive shaft 3 is supported by two bearings arranged between the input drive shaft 3 and the housing 5. The bearings are for example shrinked onto the input drive shaft 3. The bearing arranged close to the input end of the input drive shaft 3 is for example a double roller bearing in O-arrangement and the bearing arranged close to the output drive shaft 12 is for example a double roller bearing in X-arrangement. Having such a bearing arrangement advantageously increases the rotational stability of the input drive shaft 3 and the input rotor 3. The output drive shaft 12 is according to the variations as shown in Figure 4 and as shown in Figure 6 supported by two bearings. The bearing arranged close to the input drive shaft 3 is arrange between the housing 5 of the DRM 1 and the output drive shaft 12. This bearing is for example a double roller bearing in X arrangement. The bearing arranged further away from the interior of the DRM 1 is arranged between the slip ring housing 27 and the output drive shaft 12. This bearing is for example a single roller bearing. Both bearings are for example shrinked onto the output drive shaft 12. Figure 7 further differs from Figure 4 in a different embodiment of the output rotor 12, which is composed out of a plurality of rotational symmetric parts, connected via screws, compared to the single output rotor 12 of Figure 4

Rather, the words used in the specification are words of description rather than limitation, and it is understood that various changes may be made without departing from the scope of the appended claims.

**LIST OF DESIGNATIONS**

| | | | |
|---|---|---|---|
| 1 | Double rotor machine (DRM) | 16 | Second base (input rotor) |
| 2 | Drive train | 17 | Support element (input rotor) |
| 3 | Input drive shaft | 18 | Windings |
| 4 | Internal combustion engine (ICE) | 19 | Battery |
| | | 20 | Core (ferromagnetic, output rotor) |
| 5 | Housing (double rotor machine) | | |
| 6 | Input rotor | 21 | First end section |
| 7 | Ferromagnet | 22 | Second end section |
| 8 | First array of ferromagnets | 23 | Central opening (output drive shaft) |
| 9 | Second array of ferromagnets | | |
| 10 | Spacer | 24 | Cooling means |
| 11 | Output rotor | 25 | Electrical machine |
| 12 | Output drive shaft | 26 | Control unit |
| 13 | Electromagnet | 27 | Slip ring |
| 14 | Array of electromagnets (output rotor) | 28 | Slip ring housing |
| | | 29 | Wheels |
| 15 | First base (input rotor) | 30 | Gearin |
| R | Common axis of rotation | D1 | Distance (between first and second array of ferromagnets) |
| | | D2 | Distance (between input and output rotor) |

## Claims

1. A double rotor machine (1) for selective transmission of mechanical power and/or generation of electrical power in a drive train (2) of a vehicle, the double rotor machine (1) comprising:
a. an input drive shaft (3) for mechanically coupling the double rotor machine (1) to an engine (4), said input drive shaft (3) extending in an axial direction into a housing (5);
b. an input rotor (6) being mechanically interconnected to the input drive shaft (3) and being arranged inside the housing (5) rotatable about a common axis of rotation (R),
c. an output rotor (11) being arranged rotatable about the common axis of rotation (R), and being mechanically interconnected to an output drive shaft (12) passing through the housing (5) for mechanically coupling the double rotor machine (1) to a consumer of mechanical power, wherein
d. the input rotor (6) or the output rotor (11) comprises:
i. a disc-shaped first array (8) comprising ferromagnets (7) and / or ferromagnetic material elements;
ii. a disc-shaped second array (9) comprising ferromagnets (7) and / or ferromagnetic material elements arranged next to the first array (8) and being spaced apart therefrom at a certain distance (D1) in the axial direction (R, z), wherein
iii. at least one spacer (10) extending in the axial direction fixedly interconnecting the first and the second array (8, 9);
e. the input rotor (6) or the output rotor (11) comprises:
i. a disc-shaped array (14) comprising electromagnets (13) arranged next to the first and the second array (8, 9) of ferromagnets (7) and / or of ferromagnetic material elements rotatable about the common axis of rotation (R), wherein the disc-shaped array (14) of electromagnets (13) being arranged between the first and the second array (8, 9) of the input rotor (6) or the output rotor (11) respectively, wherein either the input rotor (6) comprises the disc-shaped first and second array (8, 9) and the output rotor (11) comprises the disc-shaped array (14) comprising the electromagnets (13) or the output rotor (11) comprises the disc-shaped first and second array (8, 9) and the input rotor (6) comprises the disc-shaped array (14) comprising the electromagnets (13).

2. Double rotor machine (1) according to claim 1, **wherein,** when electrical power is supplied to the output rotor (11), the output rotor (11) is drivable at a higher angular velocity than the input rotor (6), and / or wherein, when electrical power removed from the output rotor (11), the output rotor (11) is drivable at a lower angular velocity than the input rotor (6).

3. Double rotor machine (1) according to at least one of the previous claims, **wherein** at least one ferromagnet (7) and / or at least one ferromagnetic material elements of the first array (8) and/ or the second array (9) has an essentially U- or V-shaped cross-section, in particular all ferromagnets (7) and / or all ferromagnetic material elements of the first array (8) and/ or the second array (9) have an essentially U- or V-shaped cross-section.

4. Double rotor machine (1) according to at least one of the previous claims, **wherein** the disc-shaped first array (8) comprises a disc-shaped first base (15) having detachably arranged thereon in the assembled state the ferromagnets (7) and / or the ferromagnetic material elements of the first array (8) and wherein the disc-shaped second array (9) comprises a disc-shaped second base (16) having detachably arranged thereon in the assembled state the ferromagnets (7) and / or the ferromagnetic material elements of the second array (9).

5. Double rotor machine (1) according to claim 4, **wherein** the ferromagnets (7) and / or the ferromagnetic material elements of the first and/or the second array (8, 9) being position fixed by support elements (17) at the first and/or second base (15, 16) respectively, in particular the support elements (17) are in a cross-sectional view at least partially arranged inside the U- or V-shape of the respective ferromagnet (7) and / or of the ferromagnetic material elements.

6. Double rotor machine (1) according to at least one of the previous claims, **wherein** the disc-shaped array (14) of electromagnets (13) comprises at least one set of windings (18) electrically interconnectable to a battery (19) for receiving electrical energy from and/or providing electrical energy to the battery (19).

7. Double rotor machine (1) according to claim 6, **wherein** the a disc-shaped array (14) of electromagnets (13) comprises several ferromagnetic cores (20) each having in the axial direction a first end section (21) facing the first array (8) and a second end section (22) facing the second array (9), wherein the first and/or the second end section (21, 22) of each ferromagnetic core (20) is at least partially encompassed by windings (18) of a common phase.

8. Double rotor machine (1) according to one of the previous claims 2 to 7, **wherein** the output drive shaft (12) comprises a central opening (23) extending in the axial direction (R, z) concentrically with the common axis of rotation (R).

9. Double rotor machine (1) according to at least one of the previous claims, **wherein** the disc-shaped first array (8) comprises the same number of ferromagnets (7) and / or of ferromagnetic material elements as the disc-shaped second array (9).

10. Double rotor machine (1) according to at least one of the previous claims, **wherein** the ferromagnets (7) and / or the ferromagnetic material elements of the first array (8) are arranged essentially mirror-symmetric relative to the ferromagnets (7) and / or the ferromagnetic material elements of the second array (9).

11. Double rotor machine (1) according to at least one of the previous claims, **wherein** a cooling means (24) is arranged at an outside of the housing (5), said cooling means (24) being fluidly interconnected to an inside of the housing (5).

12. Double rotor machine (1) according to claim 11, wherein the cooling means (24) comprise a spray cooling oil comprising at least one nozzle interconnected to an oil sink, in particular one or two units of two or three nozzles each.

13. Double rotor machine (1) according to at least one of the preceding claims, wherein the double rotor machine (1) comprises a plurality of the disc-shaped first arrays (8) and a plurality of the disc-shaped second arrays (9) and a plurality of the disc-shaped arrays (14) of electromagnets (13) arranged next to each other and rotatable about the common axis of rotation.

14. A drive train (2) for a vehicle, the drive train comprising a double rotor machine (1) according to at least one of the claims 1 to 11, wherein an electrical machine (25) is mechanically coupled to the output drive shaft (12) of the double rotor machine (1) for transmission of torque therebetween.

15. Drive train (2) according to claim 14, wherein a control unit (26) is interconnected to the at least one set of windings (18) of the output rotor (11) or of the input rotor (6) of the double rotor machine (1) and being configured to receive an operator input and to control the transmission of rotational speed from the input rotor (6) to the output rotor (11) or vice versa based on the operator input, or wherein the control unit (26) is configured to use a control algorithm to control the double rotor machine (1) for selectively transmitting / generating mechanical power and / or selectively transmitting / generating electrical power.

## Patentansprüche

1. Doppelrotormaschine (1) zur selektiven Übertragung von mechanischer Leistung und/oder Erzeugung von elektrischer Leistung in einem Antriebsstrang (2) eines Fahrzeugs, wobei die Doppelrotormaschine (1) folgendes umfasst:
a. eine Eingangsantriebswelle (3) zur mechanischen Kopplung der Doppelrotormaschine (1) mit einem Motor (4), wobei sich die Eingangsantriebswelle (3) in axialer Richtung in ein Gehäuse (5) erstreckt;
b. einen Eingangsrotor (6), der mechanisch mit der Eingangsantriebswelle (3) wirkverbunden ist und innerhalb des Gehäuses (5) um eine gemeinsame Rotationsachse (R) drehbar angeordnet ist,
c. ein Ausgangsrotor (11), der um die gemeinsame Rotationsachse (R) drehbar angeordnet und mechanisch mit einer Ausgangsantriebswelle (12), die durch das Gehäuse (5) verläuft, wirkverbunden ist, um die Doppelrotormaschine (1) mechanisch mit einem Verbraucher mechanischer Leistung zu koppeln, wobei
d. der Eingangsrotor (6) oder der Ausgangsrotor (11) umfasst:
i. ein scheibenförmiges erstes Array (8), das Ferromagnete (7) und/oder Elemente aus ferromagnetischem Material umfasst;
ii. ein scheibenförmiges zweites Array (9), das Ferromagnete (7) und/oder Elemente aus ferromagnetischem Material umfasst, die neben dem ersten Array (8) angeordnet sind und in einem bestimmten Abstand (D1) in der axialen Richtung (R, z) von diesem beabstandet sind, wobei
iii. mindestens ein sich in axialer Richtung erstreckender Abstandshalter (10) das erste und das zweite Array (8, 9) fest miteinander verbindet;
e. der Eingangsrotor (6) oder der Ausgangsrotor (11) umfasst:
i. ein scheibenförmiges Array (14), umfassend Elektromagneten (13), die neben dem ersten und dem zweiten Array (8, 9) von Ferromagneten (7) und/oder von Elementen aus ferromagnetischem Material angeordnet sind, die um die gemeinsame Rotationsachse (R) drehbar sind, wobei das scheibenförmige Array (14) von Elektromagneten (13) zwischen dem ersten und dem zweiten Array (8, 9) des Eingangsrotors (6) bzw. des Ausgangsrotors (11) angeordnet ist, wobei entweder der Eingangsrotor (6) das scheibenförmige erste und zweite Array (8, 9) und der Ausgangsrotor (11) das die Elektromagneten (13) umfassende scheibenförmige Array (14) umfasst oder der Ausgangsrotor (11) das scheibenförmige erste und zweite Array (8, 9) und der Eingangsrotor (6) das die Elektromagneten (13) umfassende scheibenförmige Array (14) umfasst.

2. Doppelrotormaschine (1) gemäß Anspruch 1, wobei, wenn dem Ausgangsrotor (11) elektrische Energie herausnehmbar ist, der Ausgangsrotor (11) mit einer höheren Winkelgeschwindigkeit als der Eingangsrotor (6) betreibbar ist, und/oder wobei, wenn dem Ausgangsrotor (11) elektrische Energie herausnehmbar ist, der Ausgangsrotor (11) mit einer niedrigeren Winkelgeschwindigkeit als der Eingangsrotor (6) betreibbar ist.

3. Doppelrotormaschine (1) gemäß mindestens einem der vorhergehenden Ansprüche, wobei mindestens ein Ferromagnet (7) und/oder mindestens ein ferromagnetisches Materialelement des ersten Arrays (8) und/oder des zweiten Arrays (9) einen im Wesentlichen U- oder V-förmigen Querschnitt aufweist, insbesondere alle Ferromagnete (7) und/oder alle ferromagnetischen Materialelemente des ersten Arrays (8) und/oder des zweiten Arrays (9) einen im Wesentlichen U- oder V-förmigen Querschnitt aufweisen.

4. Doppelrotormaschine (1) nach mindestens einem der vorhergehenden Ansprüche, wobei das scheibenförmige erste Array (8) eine scheibenförmige erste Basis (15) umfasst, auf der im montierten Zustand die Ferromagnete (7) und/oder die ferromagnetischen Materialelemente des ersten Arrays (8) lösbar angeordnet sind und wobei das scheibenförmige zweite Array (9) eine scheibenförmige zweite Basis (16) umfasst, auf der im montierten Zustand die Ferromagnete (7) und/oder die ferromagnetischen Materialelemente des zweiten Arrays (9) lösbar angeordnet sind.

5. Doppelrotormaschine (1) gemäß Anspruch4 , **wobei** die Ferromagnete (7) und/oder die ferromagnetischen Materialelemente des ersten und/oder des zweiten Arrays (8, 9) durch Stützelemente (17) an der ersten bzw. zweiten Basis (15, 16) lagefixiert sind, insbesondere sind die Stützelemente (17) in einer Querschnittsansicht mindestens teilweise innerhalb der U- oder V-Form des entsprechenden Ferromagneten (7) und/oder der ferromagnetischen Materialelemente angeordnet.

6. Doppelrotormaschine (1) gemäß mindestens einem der vorhergehenden Ansprüche, **wobei** das scheibenförmige Array (14) von Elektromagneten (13) mindestens einen Satz von Wicklungen (18) umfasst, die elektrisch mit einer Batterie (19) einstellbar sind, um elektrische Energie von der Batterie (19) zu empfangen und/oder der Batterie (19) elektrische Energie bereitzustellen.

7. Doppelrotormaschine (1) gemäß Anspruch6 , **wobei** das scheibenförmige Array (14) von Elektromagneten (13) mehrere ferromagnetische Kerne (20) umfasst, die jeweils in axialer Richtung einen ersten Endabschnitt (21), der dem ersten Array (8) zugewandt ist, und einen zweiten Endabschnitt (22), der dem zweiten Array (9) zugewandt ist, aufweisen , wobei der erste und/oder der zweite Endabschnitt (21, 22) jedes ferromagnetischen Kerns (20) mindestens teilweise von Wicklungen (18) einer gemeinsamen Phase umgeben ist.

8. Doppelrotormaschine (1) gemäß einem der vorhergehenden Ansprüche2 bis7 , **wobei** die Ausgangsantriebswelle (12) eine zentrale Öffnung (23) umfasst, die sich in axialer Richtung (R, z) konzentrisch zur gemeinsamen Rotationsachse (R) erstreckt.

9. Doppelrotormaschine (1) gemäß mindestens einem der vorhergehenden Ansprüche, **wobei** das scheibenförmige erste Array (8) die gleiche Anzahl von Ferromagneten (7) und/oder von Elementen aus ferromagnetischem Material umfasst wie das scheibenförmige zweite Array (9).

10. Doppelrotormaschine (1) gemäß mindestens einem der vorhergehenden Ansprüche, **wobei** die Ferromagnete (7) und/oder die ferromagnetischen Materialelemente des ersten Arrays (8) im Wesentlichen spiegelsymmetrisch zu den Ferromagneten (7) und/oder den ferromagnetischen Materialelementen des zweiten Arrays (9) angeordnet sind.

11. Doppelrotormaschine (1) gemäß mindestens einem der vorhergehenden Ansprüche, **wobei** ein Kühlmittel (24) an einer Außenseite des Gehäuses (5) angeordnet ist, wobei das Kühlmittel (24) mit einer Innenseite des Gehäuses (5) wirkverbunden ist.

12. Doppelrotormaschine (1) gemäß Anspruch 11, wobei die Kühlmittel (24) ein Sprühkühlöl umfassen, das mindestens eine mit einer Ölwanne wirkverbundene Düse umfasst, insbesondere eine oder zwei Einheiten mit jeweils zwei oder drei Düsen.

13. Doppelrotormaschine (1) gemäß mindestens einem der vorangehenden Patentansprüche, wobei die Doppelrotormaschine (1) eine Vielzahl der scheibenförmigen ersten Arrays (8) und eine Vielzahl der scheibenförmigen zweiten Arrays (9) und eine Vielzahl der scheibenförmigen Arrays (14) von nebeneinander angeordneten, um die gemeinsame Rotationsachse drehbaren Elektromagneten (13) umfasst.

14. Antriebsstrang (2) für ein Fahrzeug, wobei der Antriebsstrang eine Doppelrotormaschine (1) gemäß mindestens einem der Ansprüche 1 bis11 umfasst, wobei eine elektrische Maschine (25) mechanisch mit der Ausgangsantriebswelle (12) der Doppelrotormaschine (1) gekoppelt ist, um ein Drehmoment dazwischen zu übertragen.

15. Antriebsstrang (2) gemäß Anspruch14 , **wobei** eine Steuereinheit (26) mit dem mindestens einen Satz von Wicklungen (18) des Ausgangsrotors (11) oder des Eingangsrotors (6) der Doppelrotormaschine (1) wirkverbunden ist und eingerichtet ist, um eine Bedienereingabe zu empfangen und die Übertragung der Drehzahl vom Eingangsrotor (6) zum Ausgangsrotor (11) oder umgekehrt basierend auf der Bedienereingabe zu konfigurieren, oder wobei die Steuereinheit (26) eingerichtet ist, einen Steueralgorithmus zu verwenden, um die Doppelrotormaschine (1) zur selektiven Übertragung / Erzeugung mechanischer Leistung und/oder zur selektiven Übertragung / Erzeugung elektrischer Leistung zu steuern.

## Revendications

1. Machine à double rotor (1) pour la transmission sélective de puissance mécanique et/ou la production de puissance électrique dans une chaîne cinématique (2) d'un véhicule, la machine à double rotor (1) comprenant :
a. un arbre d'entraînement d'entrée (3) pour le couplage mécanique de la machine à double rotor (1) avec un moteur (4), l'arbre d'entraînement d'entrée (3) s'étendant dans le sens axial dans un boîtier (5) ;
b. un rotor d'entrée (6) qui est relié mécaniquement à l'arbre d'entraînement d'entrée (3) et qui est disposé à l'intérieur du boîtier (5) de manière à pouvoir tourner autour d'un axe de rotation commun (R),
c. un rotor de sortie (11) qui est disposé de manière rotative autour de l'axe de rotation commun (R) et qui est relié mécaniquement à un arbre d'entraînement de sortie (12) qui traverse le boîtier (5) afin de coupler mécaniquement la machine à double rotor (1) à un consommateur d'énergie mécanique,
d. le rotor d'entrée (6) ou le rotor de sortie (11) comprenant :
i. un premier réseau en forme de disque (8) comprenant des ferromagnétiques (7) et/ou des éléments en matériau ferromagnétique ;
ii. un deuxième réseau en forme de disque (9) comprenant des ferromagnétiques (7) et/ou des éléments en matériau ferromagnétique, qui sont disposés à côté du premier réseau (8) et espacés de celui-ci d'une distance déterminée (D1) dans la direction axiale (R, z),
iii. au moins une entretoise (10) s'étendant dans la direction axiale relie solidement le premier et le deuxième réseau (8, 9) l'un à l'autre ;
e. le rotor d'entrée (6) ou le rotor de sortie (11) comprend :
i. un réseau en forme de disque (14) comprenant des électroaimants (13) disposés à côté des premier et deuxième réseaux (8, 9) de ferromagnétiques (7) et/ou d'éléments en matériau ferromagnétique pouvant tourner autour de l'axe de rotation commun (R), dans laquelle le réseau en forme de disque (14) d'électroaimants (13) est disposé entre les premier et deuxième réseaux (8, 9) du rotor d'entrée (6) ou du rotor de sortie (11) respectivement, dans laquelle soit le rotor d'entrée (6) comprend les premier et deuxième réseaux en forme de disque (8, 9) et le rotor de sortie (11) comprend le réseau en forme de disque (14) comprenant les électroaimants (13), ou bien le rotor de sortie (11) comprend les premier et deuxième réseaux en forme de disque (8, 9) et le rotor d'entrée (6) comprend le réseau en forme de disque (14) comprenant les électroaimants (13).

2. Machine à double rotor (1) selon la revendication 1, **dans laquelle,** lorsque l'énergie électrique peut être prélevée du rotor de sortie (11), le rotor de sortie (11) peut fonctionner à une vitesse angulaire supérieure à celle du rotor d'entrée (6), et/ou dans laquelle, lorsque l'énergie électrique peut être prélevée du rotor de sortie (11), le rotor de sortie (11) peut fonctionner à une vitesse angulaire inférieure à celle du rotor d'entrée (6).

3. Machine à double rotor (1) selon au moins l'une des revendications précédentes, **dans laquelle** au moins un ferromagnétique (7) et/ou au moins un élément en matériau ferromagnétique du premier réseau (8) et/ou du deuxième réseau (9) présente une section transversale essentiellement en forme de U ou de V, en particulier tous les ferromagnétiques (7) et/ou tous les éléments de matériau ferromagnétique du premier réseau (8) et/ou du deuxième réseau (9) présentent une section transversale essentiellement en forme de U ou de V.

4. Machine à double rotor (1) selon au moins l'une des revendications précédentes, **dans laquelle** le premier réseau en forme de disque (8) comprend une première base en forme de disque (15) sur laquelle, à l'état monté, les ferromagnétiques (7) et/ou les éléments de matériau ferromagnétique du premier réseau (8) sont disposés de manière amovible et dans laquelle le deuxième réseau en forme de disque (9) comprend une deuxième base en forme de disque (16) sur laquelle, à l'état monté, les ferromagnétiques (7) et/ou les éléments de matériau ferromagnétique du deuxième réseau (9) sont disposés de manière amovible.

5. Machine à double rotor (1) selon la revendication4 , **dans laquelle** les ferromagnétiques (7) et/ou les éléments en matériau ferromagnétique du premier et/ou du deuxième réseau (8, 9) sont fixés en position par des éléments de support (17) sur la première ou la deuxième base (15, 16), en particulier, les éléments de support (17) sont disposés, dans une vue en coupe transversale, au moins en partie à l'intérieur de la forme en U ou en V du ferromagnétique (7) correspondant et/ou des éléments de matériau ferromagnétique.

6. Machine à double rotor (1) selon au moins l'une des revendications précédentes, **dans laquelle** le réseau en forme de disque (14) d'électroaimants (13) comprend au moins un ensemble d'enroulements (18) qui sont électriquement connectés à une batterie (19) afin de recevoir de l'énergie électrique de la batterie (19) et/ou de fournir de l'énergie électrique à la batterie (19).

7. Machine à double rotor (1) selon la revendication6 , dans laquelle le réseau en forme de disque (14) d'électroaimants (13) comprend plusieurs noyaux ferromagnétiques (20) ayant chacun, dans la direction axiale, une première section d'extrémité (21) tournée vers le premier réseau (8) et une deuxième section d'extrémité (22) tournée vers le deuxième réseau (9), la première et/ou la deuxième section d'extrémité (21, 22) de chaque noyau ferromagnétique (20) est au moins partiellement entourée par des enroulements (18) d'une phase commune.

8. Machine à double rotor (1) selon l'une des revendications précédentes2 àFehler! Verweisquelle konnte nicht gefunden werden., dans laquelle l'arbre d'entraînement de sortie (12) comprenant une ouverture centrale (23) qui s'étend dans la direction axiale (R, z) de manière concentrique par rapport à l'axe de rotation commun (R).

9. Machine à double rotor (1) selon au moins l'une des revendications précédentes, **dans laquelle** le premier réseau en forme de disque (8) comprend le même nombre de ferromagnétiques (7) et/ou d'éléments en matériau ferromagnétique que le deuxième réseau en forme de disque (9).

10. Machine à double rotor (1) selon au moins l'une des revendications précédentes, **dans laquelle** les ferromagnétiques (7) et/ou les éléments en matériau ferromagnétique du premier réseau (8) sont disposés de manière essentiellement symétrique par rapport aux ferromagnétiques (7) et/ou aux éléments en matériau ferromagnétique du deuxième réseau (9).

11. Machine à double rotor (1) selon au moins l'une des revendications précédentes, **dans laquelle** un moyen de refroidissement (24) est disposé sur un côté extérieur du boîtier (5), ledit moyen de refroidissement (24) étant relié de manière fonctionnelle à un côté intérieur du boîtier (5).

12. Machine à double rotor (1) selon la revendication 11, **dans laquelle** le moyen de refroidissement (24) comprend une huile de refroidissement pulvérisée qui comprend au moins une buse reliée de manière fonctionnelle à un carter d'huile, en particulier une ou deux unités comprenant chacune deux ou trois buses.

13. Machine à double rotor (1) selon au moins l'une des revendications précédentes, **dans laquelle** la machine à double rotor (1) comprenant une pluralité de premiers réseaux en forme de disque (8) et une pluralité de seconds réseaux en forme de disque (9) et une pluralité de réseaux en forme de disque (14) d'électroaimants (13) disposés les uns à côté des autres et pouvant tourner autour de l'axe de rotation commun.

14. Chaîne cinématique (2) pour un véhicule, la chaîne cinématique comprenant une machine à double rotor (1) selon au moins l'une des revendications 1 à 11, dans laquelle une machine électrique (25) est couplée mécaniquement à l'arbre d'entraînement de sortie (12) de la machine à double rotor (1) afin de transmettre un couple entre ceux-ci.

15. Chaîne cinématique (2) selon la revendication14 , **dans laquelle** une unité de commande (26) est reliée de manière fonctionnelle à au moins un ensemble d'enroulements (18) du rotor de sortie (11) ou du rotor d'entrée (6) de la machine à double rotor (1) et est configurée pour recevoir une entrée de l'opérateur et pour configurer la transmission de la vitesse de rotation du rotor d'entrée (6) vers le rotor de sortie (11) ou inversement, sur la base de l'entrée de l'opérateur, ou dans lequel l'unité de commande (26) est conçue pour utiliser un algorithme de commande afin de commander la machine à double rotor (1) pour la transmission sélective d' /production d'énergie mécanique et/ou pour la transmission sélective/production d'énergie électrique.
